# EUROPEAN PATENT APPLICATION

(11) **EP 1 411 735 A2**
(43) Date of publication of application: **21.04.2004**
(21) Application number: 03256581.4
(22) Date of filing: 17.10.2003
(51) Int. Cl.: H04Q 1/02, H04M 19/00, H04M 1/02

(54) **Network Interface Device for Telecommunication Terminals**

(30) Priority: 17.10.2002 KR 2002063532
(71) Applicant: SAMSUNG ELECTRONICS CO., LTD., Suwon-City, Kyungki-do (KR)
(72) Inventor: Kim, Eog-kyu, Paldal-gu, Suwon-si, Gyeonggi-do (KR)
(74) Representative: Geary, Stuart Lloyd

(57) **Abstract**

A telecommunication terminal device is connected to a public telephone network 100 and first and second external connection devices 300, 400, one of which is parallel and the other serial. A switching unit 220 selectively connects one of the external terminal devices to the public telephone network 100 by connecting a pin 214 of a PSTN network connection unit 210 associated with the PSTN 100 either to a pin 218 of the PSTN connection unit associated with the first external device connection 210 or to a pin 234 of an external device connection 230 associated with the second external device 400. A second switching unit 260 is arranged to connect a pin 212 of the PSTN connection unit associated with the PSTN 100 either to another pin 214 of the network connection unit associated with the PSTN 100 via a feeding circuit 240, or to a pin 216 of the PSTN connection unit associate with the first external terminal device 300. Automatic switching can occur using input from a terminal detection unit 250.

## Description

A first aspect of the invention relates to a telecommunication terminal device suitable for connection to a public telephone network, the telecommunications terminal device comprising: a network connection unit having first and second public telephone network connections. A second aspect of the invention relates to a method of operating a telecommunication terminal device.

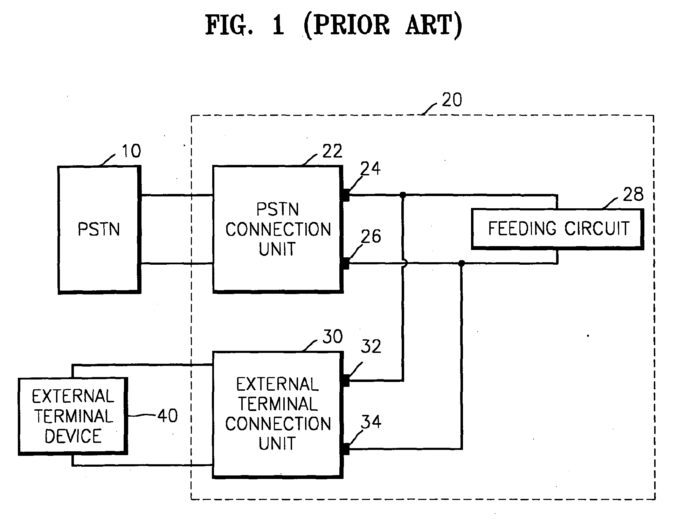

Figure 1 is a block diagram of a telecommunication terminal device typically used in Korea and the United States. Referring to Figure 1, a telecommunication terminal device 20 is connected as a main terminal device to a public switched telephone network (PSTN) 10. An external telecommunication terminal device 40 (such as a telephone, a facsimile machine, or the like) is connected as a sub terminal device to the main terminal device 20. The main terminal device 20 includes a PSTN connection unit 22 having two pins 24 and 26 through which the PSTN 10 and a feeding circuit 28 of the main terminal device 20 are connected. The main terminal device 20 also includes an external terminal connection unit 30 having two pins 32 and 34 through which the sub terminal device 40 is connected in parallel to the main terminal device 20.

Here, an electrical current provided from the PSTN 10 flows into the feeding circuit 28 and returns to the PSTN 10 through the two pins 24 and 26 of the PSTN connection unit 22. That is, a current loop is formed between the PSTN 10 and the feeding circuit 28 through the two pins 24 and 26 of the PSTN connection unit 22.

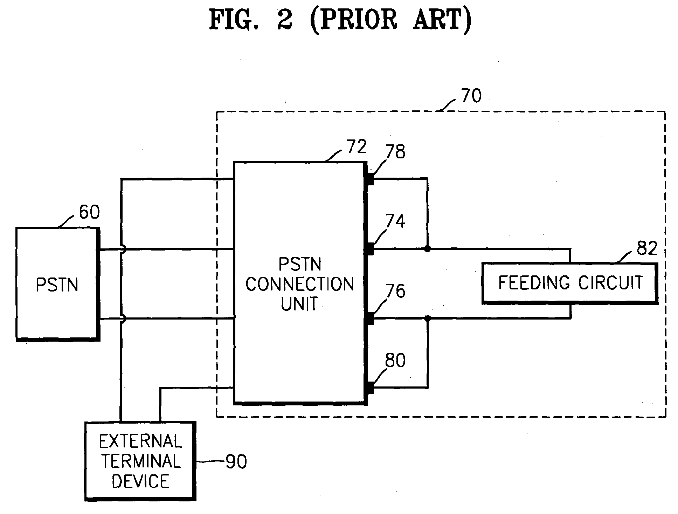

Figure 2 is a block diagram of a telecommunication terminal device typically used in Germany or Italy. Referring to Figure 2, a telecommunication terminal device 70 is connected as a main terminal device to a PSTN 60. An external telecommunication terminal device 90 is connected as a sub terminal device to the main terminal device 70. The main terminal device 70 includes a PSTN connection unit 72 having four pins 74, 76, 78, and 80. The PSTN 60 and a feeding circuit 82 of the main terminal device 70 are connected through two pins 74 and 76 among the four pins of the PSTN connection unit 72. The external terminal device 90 is serially connected to the main terminal device 70 through the other two pins 78 and 80 of the PSTN connection unit 60.

Here, an electrical current provided from the PSTN 60 flows into the feeding circuit 82 and returns to the PSTN 60 through the two pins 74 and 76 of the PSTN connection unit 72. That is, a current loop is formed between the PSTN 60 and the feeding circuit 82 through the two pins 74 and 76 of the PSTN connection unit 72.

Reference is made to US-A- 5,912,964 for background art.

Although the external terminal device 40 is connected to the main terminal device 20 through the pins 32 and 34 of the external terminal connection unit 30 in Figure 1, the external terminal device 90 is connected to the main terminal device 70 through the remaining pins 78 and 80 of the PSTN connection unit 72 in Figure 2. This requires the main terminal devices 20, 70 to be used differently in connection with their respective external terminal device 40, 90. Therefore, it is required to manufacture terminal devices having different interface systems on a country or regional basis. That is, for countries such as Korea and the United States, a parallel type terminal device having the interface system shown in Figure 1 is required. For countries such as Germany and Italy, a serial type terminal device having the interface system shown in Figure 2 is required. Devices operable in Korea and the US cannot be used in Germany and Italy, and *vice versa.*

The first aspect of the invention is characterised in comprising:
first and second external terminal connection units for providing connection between a first external terminal device of a first type and the public telephone network and for providing connection between a second external terminal device of a second type, different to the first type, and the public telephone network, respectively; and
a switching unit arranged selectively to connect one of the first and second external terminal devices to the public telephone network connections.

The second aspect of the invention is characterised in comprising:
determining whether a first external terminal device is to be connected, and allowing telecommunication between it and a public telephone network if appropriate; and
otherwise, determining whether a second external terminal device is to be connected, and allowing telecommunication between it and the public telephone network if appropriate.

Embodiments of the invention will now be described, by way of example only, with reference to the accompanying drawings, in which:
Figure 1 is a block diagram of a parallel type telecommunication terminal device connected to a public telephone network and an external terminal device;
Figure 2 is a block diagram of a serial type telecommunication terminal connected to an external terminal device;
Figure 3 is a block diagram of a first embodiment of a telecommunication terminal device according to the present invention, connected to a public telephone network and first and second external terminal devices;
Figure 4 is a block diagram of a second embodiment of a telecommunication terminal device according to the present invention;
Figure 5 is a block diagram of a third embodiment of a telecommunication terminal device according to the present invention;
Figures 6 to 8 shows currents applied to the telecommunication terminal device shown in Figure 3 under different switching states;; and
Figure 9 is a flowchart of a method of using a telecommunication terminal device according to one aspect of the present invention.

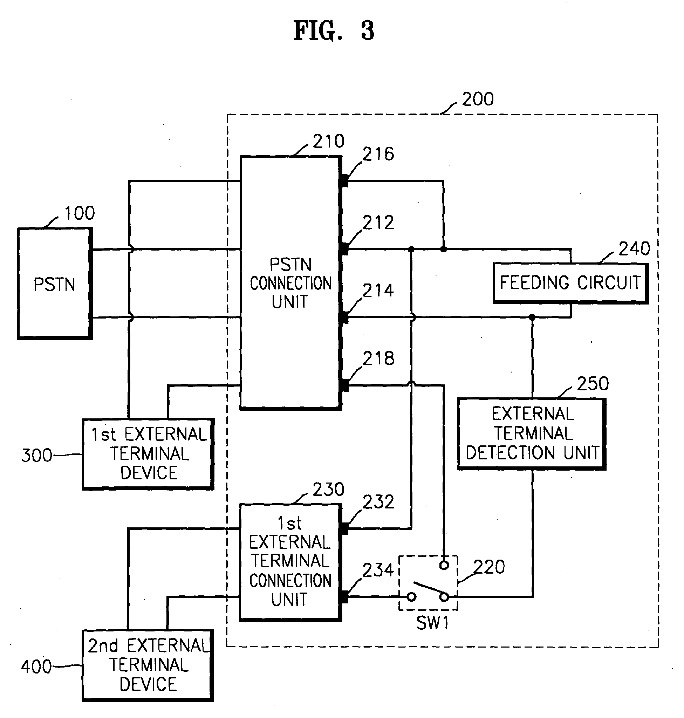

Referring to Figure 3, a telecommunication terminal device 200 (hereinafter referred to as a "main terminal device") is shown together with a public switched telephone network (PSTN) 100, a first external terminal device 300, and a second external terminal device 400. The PSTN 100 is a conventional public switched telephone network operated by a public telecommunication service provider, through which telephone and/or data communication services are provided utilising a telephone service providing station (not shown). DC currents flowing through the PSTN 100 are received at the main terminal device 200.

The main terminal device 200 includes a PSTN connection unit 210, a first switching unit 220, a first external terminal connection unit 230, a feeding circuit 240, and an external terminal detection unit 250. The PSTN connection unit 210 has a first pin 212, a second pin 214, a third pin 216, and a fourth pin 218. However, more pins may be included in the PSTN connection unit 210.

The PSTN connection unit 210 connects the main terminal device 200 with the PSTN 100 through the first and the second pins 212 and 214. Further, the PSTN connection unit 210 connects the first external terminal device 300 with the first and the second pins 212 and 214 through the third and the fourth pins 216 and 218. Here, the fourth pin 218 is connected with the first switching unit 220.

The first switching unit 220 selectively connects either the first external terminal device 300 or the second external terminal device 400 with the PSTN 100. To enable this, a pole of the first switching unit 220 is connected to a transmission line which connects the feeding circuit 240 and the second pin 214 of the PSTN connection unit 210. The throws of the first switching unit 220 are connected to the fourth pin 218 of the PSTN connection unit 210 and to a sixth pin 234 included in the external terminal connection unit. The first switching unit 220 may be manually operable. If a parallel type interface as shown in Figure 1 is required, a user can switch the first switching unit 220 to connect the second external terminal device 400 with the PSTN 100. On the other hand, if a serial type interface as shown in Figure 2 is required, the user switches the first switching unit 220 to connect the first external terminal device 300 with the PSTN 100. However, this operation can be performed automatically following an automated determination of the type of the external terminal device 300, 400.

The first external terminal connection unit 230 has a fifth pin 232 as well as the sixth pin 234. The first external terminal connection unit 230 may include more pins. The first external terminal connection unit 230 connects the second external terminal device 400 with the first and the second pin 212 and 214 through the fifth and the sixth pins 232 and 234. The sixth pin 234 is connected with the first switching unit 220.

The telephone exchange determines whether the main terminal device 200 is in an active mode by detecting the DC currents flowing into the main terminal device 200. That is, if the currents continuously flow into the main terminal device 200, the telephone exchanger determines that a telecommunication line to the main terminal device 200 is active. The purpose of the feeding circuit 240 is to maintain the flow of DC current from a telephone exchange (not shown), in order to sustain an active telecommunication mode of the main terminal device 200.

The external terminal detection unit 250 detects whether telecommunication signals are exchanged between the second external terminal device 400 and the PSTN 100. It is preferable, but not essential, that the external terminal detection unit 250 is placed between the first switching unit 220 and the transmission line connecting the feeding circuit 240 and the second pin 214. The external terminal detection unit 250 may have a user detectable output, such as a small light. Alternately, a controller (not shown) may detect signals provided by the external terminal detection unit 250 and thereby determine whether the second external terminal device 400 is currently exchanging telecommunication signals with the PSTN 100.

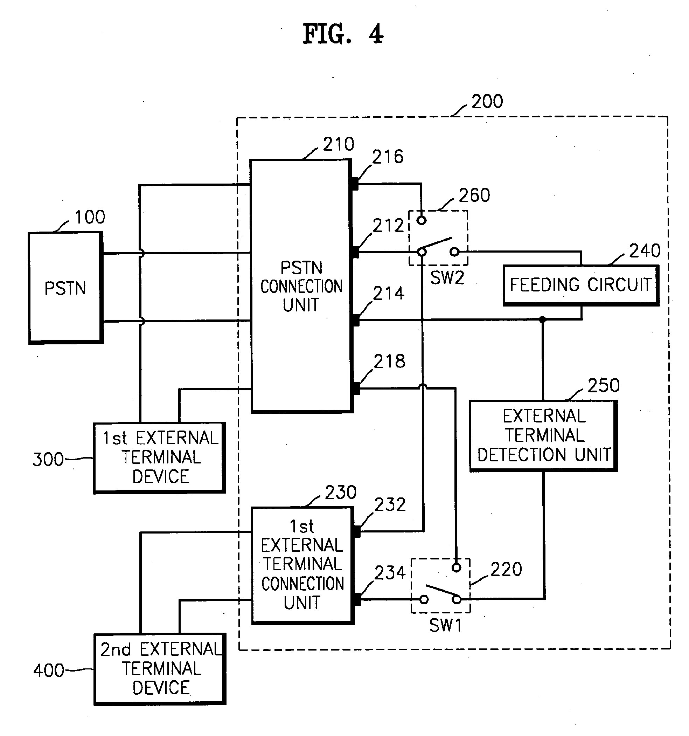

Figure 4 is a block diagram of a telecommunication terminal device according to a second embodiment of the invention, to which a second external terminal device 400 is connected through a second switching unit 260. A detailed description of the elements identical to those shown in Figure 3 are omitted here.

Referring to Figure 4, the second switching unit 260 connects the first pin 212 of the PSTN connection unit 210 either with the third pin 216 or with the feeding circuit 240. When the second switching unit 260 connects the first pin 212 of the PSTN connection unit 210 with the third pin 216, the currents provided from the PSTN 100 are applied to the first external terminal device 300 through the first and the third pins 212 and 216. Here, the feeding circuit 240 is disconnected. Therefore, the second switching unit 260 in this state does not allow the first external terminal device 300 to transmit or receive telecommunication signals.

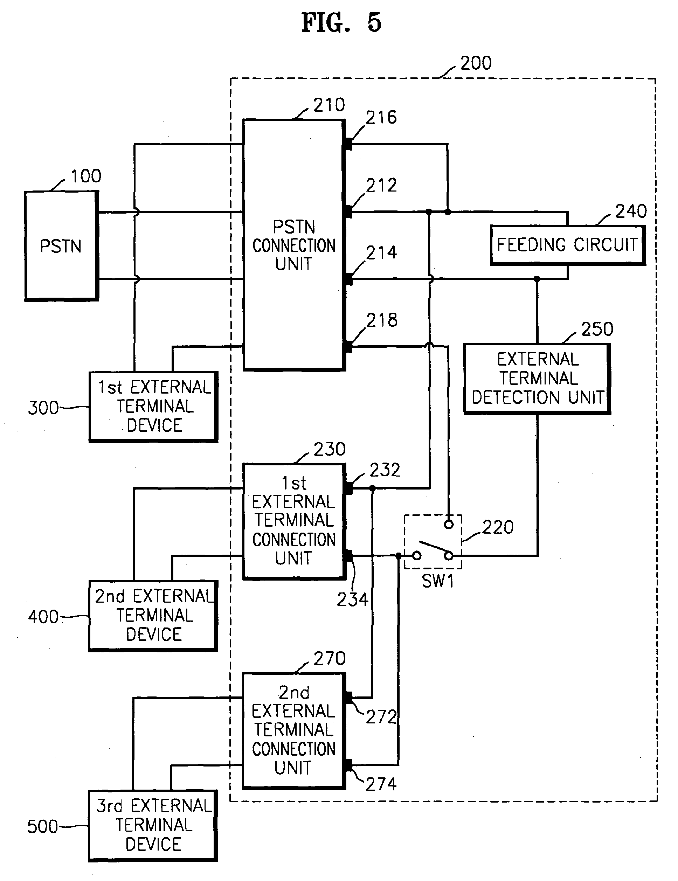

In the embodiment shown in Figure 5, a third external terminal device 500 is connected through a second external terminal connection unit 270. A detailed description of the elements identical to those shown in Figure 3 are omitted here.

Referring to Figure 5, the second external terminal connection unit 270 has a seventh pin 272 and an eighth pin 274 (although it may have more pins). The second external terminal connection unit 270 connects the third external terminal device 500 with the fifth and the sixth pins 232 and 234 through the seventh and the eighth pins 272 and 274. The second external terminal connection unit 270 receives current applied from the PSTN 100 to the fifth and the sixth pins 232 and 234 of the first external terminal connection unit 230, and provides the current to the third external terminal device 500. Also, a third external terminal connection unit (not shown) includes at least two pins that are connected to the seventh and the eighth pins 272 and 274, respectively. Therefore, the third external terminal connection unit is provided with currents applied from the seventh and the eighth pins 272 and 274 of the second external terminal connection unit 270 and supplies the provided currents to a fourth external terminal device (not shown).

Thus, it can be said that a kth external terminal connection unit is included in the main terminal device 200, where k is a positive integer greater than 1. The kth external terminal connection unit has at least an i^{th} pin and an (i+1)^{th} pin, and connects a j^{th} external terminal device with the fifth and the sixth pins 232 and 234 through the i^{th} and the (i+1)^{th} pins, where i is a positive integer greater than 6, and j is a positive integer greater than 2.

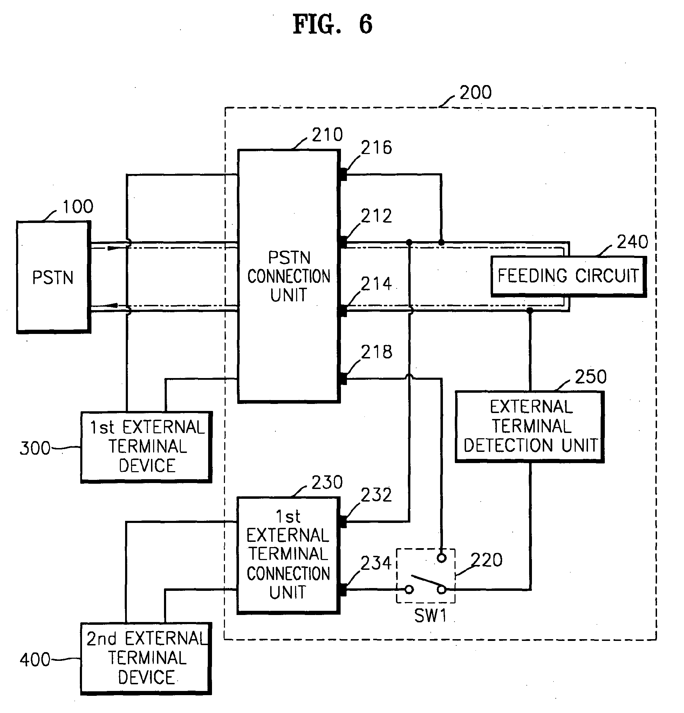

Operation of the Figure 3 device will be described with reference to Figures 6 to 8. Figure 6 shows current applied to the main terminal device 200 when no external terminal devices 300, 400 are connected thereto. Current applied from the PSTN 100 to the PSTN connection unit 210 is applied to the feeding circuit 240 through the first pin 212 of the PSTN connection unit 210. Current passing to the feeding circuit 240 is fed to the PSTN 100 through the second pin 214 of the PSTN connection unit 210.

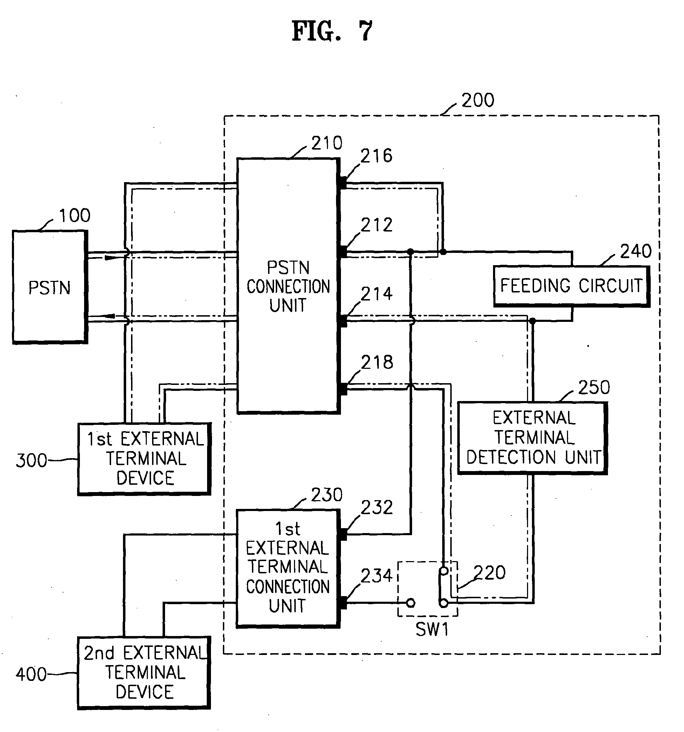

Figure 7 shows current applied to the main terminal device 200 when the first switching unit 220 connects the first external terminal device 230 with the PSTN 100. The current applied from the PSTN 100 to the PSTN connection unit 210 is applied to the feeding circuit 240 through the first pin 212 of the PSTN connection unit 210, as described above. In addition, current is applied to the first external terminal device 300 through the first and the third pins 212 and 216 of the PSTN connection unit 210. Current applied to the first external terminal device 300 is applied to the first switching unit 220 through the fourth pin 218 of the PSTN connection unit 210. Current applied to the first switching unit 220 is fed to the PSTN 100 through the external terminal detection unit 250 and then through the second pin 214 of the PSTN connection unit 210. Here, since the second external terminal device 400 is disconnected from the PSTN 100 by the first switching unit 220, no current is fed to the second external terminal device 400. Therefore, the second external terminal device 400 is disconnected, i.e. in a disabled mode, and no telecommunication signals can be exchanged through the second external terminal device 400.

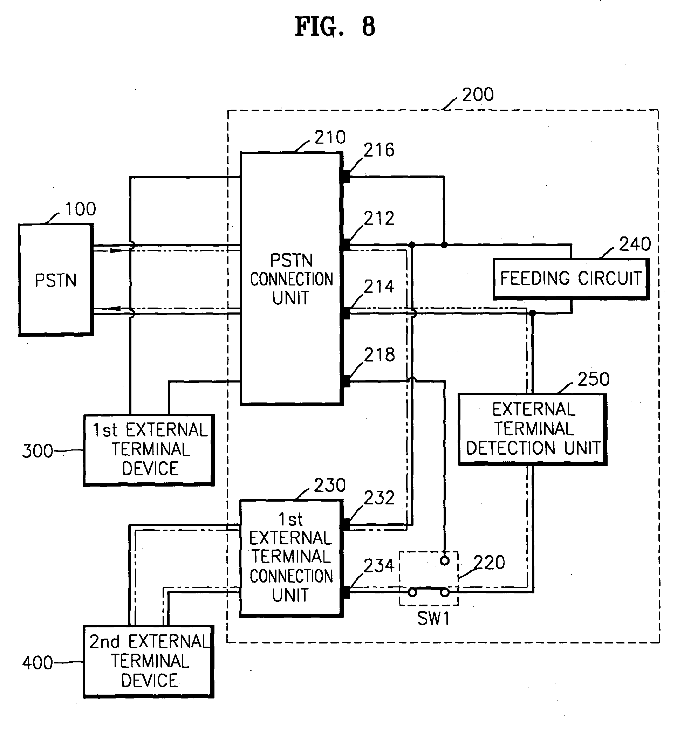

Figure 8 shows current applied to the main terminal device 200 when the first switching unit 220 connects the second external terminal device 400 with the PSTN 100. Current applied from the PSTN 100 to the PSTN connection unit 210 are fed to the feeding circuit 240 through the first pin 212 of the PSTN connection unit 210 as described above. In addition, current is applied to the fifth pin 232 of the first external terminal connection unit 230 through the first pin 212 of the PSTN connection unit 210. Current applied to the fifth pin 232 is fed to the second external terminal device 400. Current fed to the second external terminal device 400 is applied to the first switching unit 220 through the sixth pin 234 of the first external terminal connection unit 230. Current applied to the first switching unit 220 is fed to the PSTN 100 through the external terminal detection unit 250 and then through the second pin 214 of the PSTN connection unit 210. Here, since the first external terminal device 300 is disconnected with the PSTN 100 by the first switching unit 220, no current is provided to the first external terminal device 300. Therefore, the first external terminal device 300 is disconnected, i.e. in a disabled mode, and no telecommunication signals can be exchanged through the first external terminal device 400.

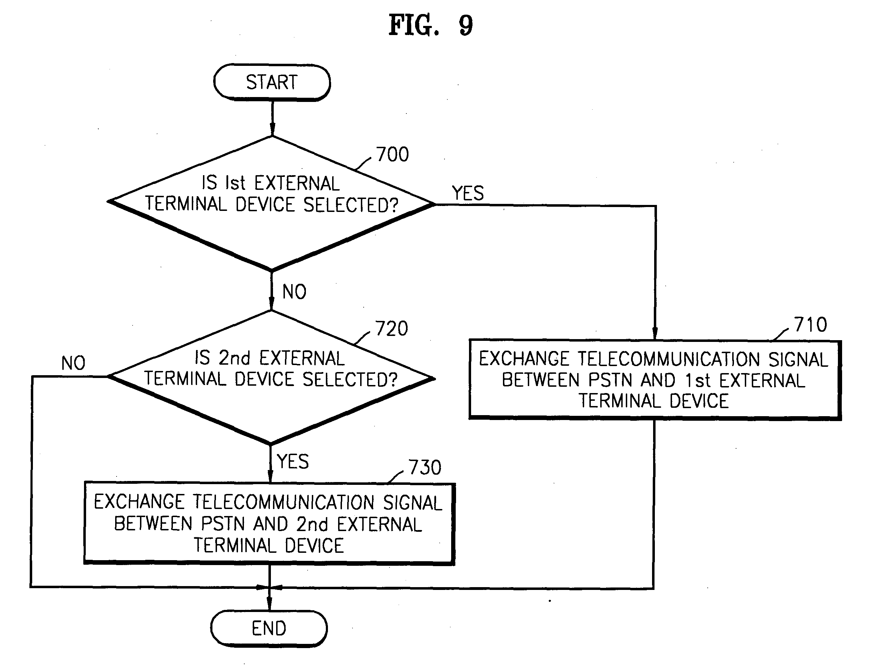

A method of using any of the above described telecommunication terminal devices is now described with reference to the flowchart of Figure 9.

At step 700, it is determined whether the first external terminal device 300 is selected. If it is determined that the first external terminal device 300 is selected, step 710 causes telecommunication signals to be exchanged between the PSTN 100 and the first external terminal device 300. Circuit connection and current flow for exchanging telecommunication signals in step 710 are shown in Figure 7. That is, as the first switching unit 200 is switched to connect the fourth pin 218 of the PSTN connection unit 210, the PSTN 100 and the first external terminal device 300 are allowed to exchange telecommunication signals.

However, if it is determined at step 700 that the first external terminal device 300 is not selected in, it is determined at step 720 whether the second external terminal device 400 is selected. If it is determined that the second external terminal device 400 is selected, at step 730 telecommunication signals are exchanged between the PSTN 100 and the second external terminal device 400. Circuit connection and current flow for exchanging telecommunication signals in step 730 are shown in Figure 8. That is, as the first switching unit 200 is switched to connect the sixth pin 234 of the first external terminal connection unit 230, the PSTN 100 and the second external terminal device 400 are allowed to exchange telecommunication signals.

The method of Figure 9 can be implemented using a suitably programmed or hardwired controller. Any computer program could be implemented as firmware.

The above-described telecommunication terminal devices are capable of exchanging telecommunication signals regardless of whether external terminal devices are serial or parallel type devices.

It will be appreciated by those skilled in the art the above described embodiments are not limiting and that various changes in form and detail may be made therein without departing from the scope of the invention as defined by the claims. For example, the PSTN connection unit 210 might be constituted by a network connection unit and a separate external terminal connection unit, although a unitary unit is preferred.

## Claims

**1.** A telecommunication terminal device suitable for connection to a public telephone network, the telecommunications terminal device comprising:
a network connection unit (210) having first and second public telephone network connections (212, 214),
**characterised in** comprising:
first and second external terminal connection units (210, 230) for providing connection between a first external terminal device (300) of a first type and the public telephone network and for providing connection between a second external terminal device (400) of a second type, different to the first type, and the public telephone network, respectively; and
a switching unit (220, 260) arranged selectively to connect one of the first and second external terminal devices to the public telephone network connections.

**2.** A device as claimed in claim 1, in which the switching unit (220, 260) is disposed in a circuit between a pin (212, 214) of the network connection unit (210) and a pin (216, 218) of the first external device connection (210).

**3.** A device according to claim 2, in which the switching unit (220) is arranged to connect a pin (214) of the network connection unit (210) either to a pin (218) of the first external device connection (210) or to a pin (234) of the second external device connection (230).

**4.** A device according to claim 3, further comprising a second switching unit (260) arranged to connect a pin (212) of the network connection unit either to another pin (214) of the network connection unit via a feeding circuit (240) or to a pin (216) of the first external device connection (210).

**5.** A device according to claim 2, in which the switching unit (260) is arranged to connect a pin (212) of the network connection unit either to another pin (214) of the device connection (210).

**6.** A device according to any preceding claim, wherein the or each switching unit (220, 260) selectively establishes a parallel connection between the public telephone network connections (212, 214) and one of the first and second external terminal devices (300, 400), and selectively establishes a serial connection between the public telephone network connections and the other one of the first and second external terminal devices.

**7.** A device according to any preceding claim, further comprising a detection unit (250) connected to detect which of the first and second external terminal devices is communicating with the public telephone network.

**8.** A device according to any preceding claim, in which a or the feeding circuit (240) is connected between pins of the network connection circuit

**9.** A device according to any preceding claim, in which the network connection unit and the first external terminal connection unit are unitary (210).

**10.** A device according to any preceding claim, further comprising one or more additional external terminal connection units.

**11.** A method of operating a telecommunication terminal device, **characterised in** comprising:
determining (700) whether a first external terminal device is to be connected, and allowing (710) telecommunication between it and a public telephone network if appropriate; and
otherwise, determining (720) whether a second external terminal device is to be connected, and allowing (730) telecommunication between it and the public telephone network if appropriate.

**12.** A method as claimed in claim 11, wherein the external terminal devices are of different connection types.

**13.** A method as claimed in claim 12, wherein the first type of connection is a serial connection and the second type of connection is a parallel connection.

**14.** A method as claimed in any of claims 11 to 13, wherein the allowing telecommunication step comprises establishing either a serial connection or a parallel connection depending on the device type.

**15.** A method as claimed in any of claims 11 to 14, wherein: the allowing (710) telecommunication between the first external terminal device and the public telephone network step comprises setting a switching unit to a first state; and the allowing (730) telecommunication between the second external terminal device and the public telephone network step comprises setting a switching unit to a second state.

**16.** A method as claimed in any of claims 11 to 15, wherein opening a connection between the public telephone network and one of the first and second external terminal devices comprises disconnecting an established connection between the public telephone network and the other of the first and second external terminal devices.

**17.** A method as claimed in claim 15 and claim 16, wherein the disconnecting step is independent of the first and second states of the switching unit.

**18.** A method claimed in any of claims 11 to 17, further comprising indicating to a user that the second external terminal device is connected to the public telephone network.

**19.** A telecommunication terminal device for use with a public telephone network to transmit and receive telecommunication signals and is capable of connecting external terminal devices of different types with the public telephone network, the telecommunications terminal device comprising:
a network connection unit having at least a first pin and a second pin to which the public telephone network is connected, and a third pin and a fourth pin through which a first external terminal device of a first type is connected to the first and the second pins according to a first switching unit;
the first switching unit to selectively connect the first external terminal device and a second external terminal device of a second type other than the first type with the public telephone network;
a first external terminal connection unit having at least a fifth pin and a sixth pin through which the second external terminal device is connected to the first and the second pins according to the first switching unit; and
a feeding circuit connected to the first and the second pins to keep a current provided from the public telephone network flowing.

**20.** The telecommunication terminal device according to claim 19, further comprising a second switching unit to selectively connect the first pin of the network connection unit to the third pin and to the feeding circuit.

**21.** The telecommunication terminal device according to claim 19 or 20, further comprising a transmission line which connects the feeding circuit and the second pin, wherein the first switching unit selectively connects the fourth pin and the sixth pin with the transmission line.

**22.** The telecommunication terminal device according to claim 21, further comprising an external terminal detection unit connected between the first switching unit and the transmission line and which detects whether telecommunication signals are transmitted and received between the second external terminal device and the public telephone network.

**23.** The telecommunication terminal device according to claim 19, further comprising a k^{th} external terminal connection unit having at least an i^{th} pin and an (i+1)^{th} pin through which a j^{th} external terminal device is connected with the fifth and the sixth pins, wherein i is a positive integer greater than 6, j is a positive integer greater than 2, and k is a positive integer greater than 1.

**24.** A method of using a telecommunication terminal device comprising:
determining whether a first external terminal device is selected;
if there is a determination that the first external terminal device is selected, allowing telecommunications between a public telephone network and the first external terminal device;
if there is a determination that the first external terminal device is not selected, determining whether a second external terminal device is selected; and
if there is a determination that the second external terminal device is selected and that the first external terminal device is not selected, allowing telecommunications between the public telephone network and the second external terminal device.

**25.** The telecommunication terminal device according to claim 19, wherein the first switching unit selectively establishes a parallel connection between the public telephone network and one of the first and second external terminal devices, and selectively establishes a serial connection between the public telephone network and the other one of the first and second external terminal devices.

**26.** The method of claim 24, wherein the allowing telecommunications between the public telephone network and the first external terminal device comprises establishing one of a serial connection and a parallel connection between the first external terminal device and the public telephone network.

**27.** The method of claim 24, wherein the allowing telecommunications between the public telephone network and the second external terminal device comprises establishing one of a serial connection and a parallel connection between the second external terminal device and the public telephone network.

**28.** The method of claim 27, wherein the allowing telecommunications between the public telephone network and the first external terminal device comprises establishing the other one of the serial and the parallel connections between the first external terminal device and the public telephone network.

**29.** The method of claim 28, wherein:
the establishing the one of the serial and the parallel connections between the second external terminal device and the public telephone network comprises switching a switching unit of a terminal to which the second external terminal device is connected to a first state, and
the establishing the other one of the serial and the parallel connections between the first external terminal device and the public telephone network comprises switching the switching unit of the terminal to which the first external terminal device is connected to a second state other than the first state.

**30.** The method of claim 24, further comprising indicating to a user that the second external terminal device is connected to the public telephone network.

**31.** The method of claim 24, further comprising opening a connection between the public telephone network and one of the first external terminal device and the second external terminal device so as to disconnect an established connection between the public telephone network and the one of the first external terminal device and the second external terminal device.

**33.** The method of claim 30, further comprising opening a connection between the public telephone network and one of the first external terminal device and the second external terminal device so as to disconnect an established connection between the public telephone network and the one of the first external terminal device and the second external terminal device regardless of the first and second states of the switching unit.

**34.** A telecommunication terminal device for use with a public telephone network and external terminal devices of different types, the telecommunications terminal device comprising:
a network connection unit through which a connection to the public telephone network is maintained;
a first external terminal connection unit which serially connects a serial-type external terminal device to the public telephone network using the network connection unit according to a first switching unit being in a first state;
a second external terminal connection unit which connects a parallel-type external terminal device in parallel to the public telephone network using the network connection unit according to the first switching unit being in a second state; and
the first switching unit electrically connected between the network connection unit and the first and second external connection units such that, according to the first and second states, the serial-type external terminal device and the parallel-type second external terminal device are connected with the public telephone network.

**35.** The telecommunication terminal device of claim 34, further comprising a connection unit comprising the network connection unit and one of the first external terminal connection unit and the second external terminal connection unit.

**36.** The telecommunication terminal device of claim 34, wherein:
the network connection unit includes first and second pins,
the first external terminal connection unit comprises third and fourth pins, and
the first switching unit is disposed in a connection between one the first and second pins and one of the third and fourth pins so that, when in the first state, the serial connection is formed, and when in the second state, the serial connection is not formed.

**37.** The telecommunication terminal device of claim 34, wherein:
the network connection unit includes first and second pins,
the second external terminal connection unit comprises third and fourth pins, and
the first switching unit is disposed in an electrical pathway between one the first and second pins and one of the third and fourth pins so that, when in the first state, the parallel connection is formed, and when in the second state, the parallel connection is not formed.

**38.** The telecommunication terminal device of claim 36, wherein:
the second external terminal connection unit comprises fifth and sixth pins, and
the first switching unit is disposed in an electrical pathway between one the first and second pins and one of the fifth and sixth pins so that, when in the second state, the parallel connection is formed, and when in the first state, the parallel connection is not formed.

**39.** The telecommunication terminal device of claim 34, further comprising a second switching unit disposed in an electrical pathway between one of the first and second external terminal devices and the network connection unit so that, when in a first state, the electrical pathway is disconnected, and when in a second state, the electrical pathway is connected.

**40.** The telecommunication terminal device of claim 36, further comprising a second switching unit disposed in an electrical pathway between one the first and second pins and one of the third and fourth pins so that, when in the first state, the serial connection is opened and when in a second state, the serial connection is closed.

**41.** The telecommunication terminal device of claim 34, further comprising a detection unit which detects which one of the first and second external terminal devices is transmitting signals across the public telephone network.

**42.** A method of using a telecommunication terminal device comprising:
if a first external terminal device of a first type is to be connected through the telecommunication terminal device to a public telephone network, establishing a first type of connection between the public telephone network and the first external terminal device corresponding to the first type of the first external terminal device; and
if a second external terminal device of a second type other than the first type is to be connected through the telecommunication terminal device to the public telephone network, establishing a second type of connection between the public telephone network and the second external terminal device corresponding to the second type of the second external terminal device,
wherein the first external terminal device cannot be connected using the second type of connection and the second external terminal device cannot be connected using the first type of connection.

**43.** The method of claim 42, wherein the first type of connection is a serial connection and the second type of connection is a parallel connection.
